Europäisches Patentamt

European Patent Office

Office européen des brevets

(11) Veröffentlichungsnummer: **0 417 475 A1**

(12) **EUROPÄISCHE PATENTANMELDUNG**

(21) Anmeldenummer: 90115276.9

(22) Anmeldetag: 09.08.90

(51) Int. Cl.⁵: **B23Q 7/14, B23P 21/00**

(30) Priorität: 12.09.89 DE 3930371

(43) Veröffentlichungstag der Anmeldung:
20.03.91 Patentblatt 91/12

(84) Benannte Vertragsstaaten:
**CH DE ES FR GB IT LI**

(71) Anmelder: **SCHUNK AUTOMATION GMBH**
**Rodheimer Strasse 59**
**W-6301 Heuchelheim(DE)**

(72) Erfinder: **Herkommer, Rudolf**
**Bahnhofstrasse 62**
**W-7052 Schwaikheim(DE)**

(74) Vertreter: **Sparing Röhl Henseler**
**Patentanwälte European Patent Attorneys**
**Rethelstrasse 123**
**W-4000 Düsseldorf 1(DE)**

(54) Montagestation mit einem Förderer für Werkstückträger.

㉗ Die Erfindung betrifft eine Montagestation mit einem Förderelemente (3) aufweisenden Förderer (2) zum Befördern von Werkstückträgern (20), mit einer feststehenden Platte (1) verbundene Klemmbacken (21) zum Halten der Werkstückträger in einer Bearbeitungsposition für hiervon getragene Werkstücke und mit einem in die Förderbahn einführbaren Stopper zum Anhalten der Werkstückträger gegenüber dem Förderer. Um ein stabiles Halten und Positionieren einfach zu erreichen, ist vorgesehen, daß die Platte mit davon aufragenden Stützelementen (19) versehen ist, die zwischen den Förderelementen angeordnet sind, der Förderer gegenüber der Platte über eine Hubeinrichtung derart absenkbar ist, daß die Stützelemente etwas über die von dem Förderer gebildete Förderebene hinausragen, und die Klemmbacken in Richtung gegen die Stützelemente verstellbar sind.

Fig. 1

Die Erfindung betrifft eine Montagestation mit einem Förderelemente aufweisenden Förderer zum Befördern Von Werkstückträgern, mit mit einer feststehenden Platte Verbundenen Klemmbacken zum Positionieren und Halten der Werkstückträger in einer Bearbeitungsstation für von den Werkstückträgern getragene Werkstücke und mit einem in die Förderbahn der Werkstückträger einführbaren Stopper zum Anhalten der Werkstückträger gegenüber dem Förderer.

Aus der DE-C-3 832 845 ist eine derartige Montagestation bekannt, bei der eine Anhaltevorrichtung zum Anhalten der Werkstückträger auf dem Transportweg Vorgesehen ist, während über eine Positionier- und Haltevorrichtung der angehaltene Werkstückträger in der Montagestation positioniert und während der Montage bzw. Bearbeitung der auf dem Werkstückträger befindlichen Werkstücke positioniert gehalten wird. Zum Halten und Positionieren besitzt der Werkstückträger eine Seitliche, gegebenenfalls umlaufende V-Nut, in die an Klemmbacken Vorgesehene Klingen bzw. Stifte eindringen, wobei die Stifte zusätzlich mit ihren Spitzen mit Zentrierbohrungen in Eingriff gelangen. Während der Montage bleibt der Förderer in Betrieb, so daß das Halten gegen die Förderkraft Statfinden muß. Außerdem müssen die in der Montagestation während der Montage bzw. Bearbeitung der Werkstücke auf dem Werkstückträger einwirkenden Kräfte aufgenommen werden. Die seitliche Halterung und Positionierung ist konstruktiv aufwendig und nur bei entsprechendem Aufwand genügend stabil.

Aufgabe der Erfindung ist es, eine Montagestation der eingangs genannten Art zu schaffen, die bei geringem konstruktivem Aufwand eine sehr stabile Halterung und Positionierung der Werkstückträger ermöglicht

Diese Aufgabe wird dadurch gelöst, daß die feststehende Platte mit davon aufragenden Stützelementen Versehen ist, die zwischen den Förderelementen angeordnet sind, der Förderer gegenüber der Platte über eine Hubeinrichtung derart absenkbar ist, daß die Stützelemente etwas über die vom Förderer gebildete Förderebene hinausragen, und die Klemmbacken in Richtung gegen die Stützelemente Verstellbar sind.

Hierdurch werden die Werkstückträger von oben nach unten auf Stützele mente positioniert und gehalten. Dies ist wesentlich stabiler als ein Positionieren und Halten von der Seite her. Außerdem ist der konstruktive Aufwand hierfür trotz der großen Kraftaufnahmemöglichkeit sehr gering.

Da die Werkstückträger mit dem Förderer nur geringfügig abgesenkt werden und dadurch auf den Stützelementen zur Auflage gelangen, gegen die sie dann durch zentrierende Klemmbacken gedrückt werden, werden die auf den Werkstückträgern befindlichen Werkstücke keinen starken Stößen ausgesetzt, die zu einem Verschieben oder Herunterfallen der Werkstücke führen könnten.

Weitere Ausgestaltungen der Erfindung sind den Unteransprüchen und der nachfolgenden Beschreibung zu entnehmen.

Die Erfindung wird nachstehend im Zusammenhang mit einem in den beigefügten Abbildungen dargestellten Ausführungsbeispiel eines Halte- und Positioniertisches für eine Montagestation näher erläutert.

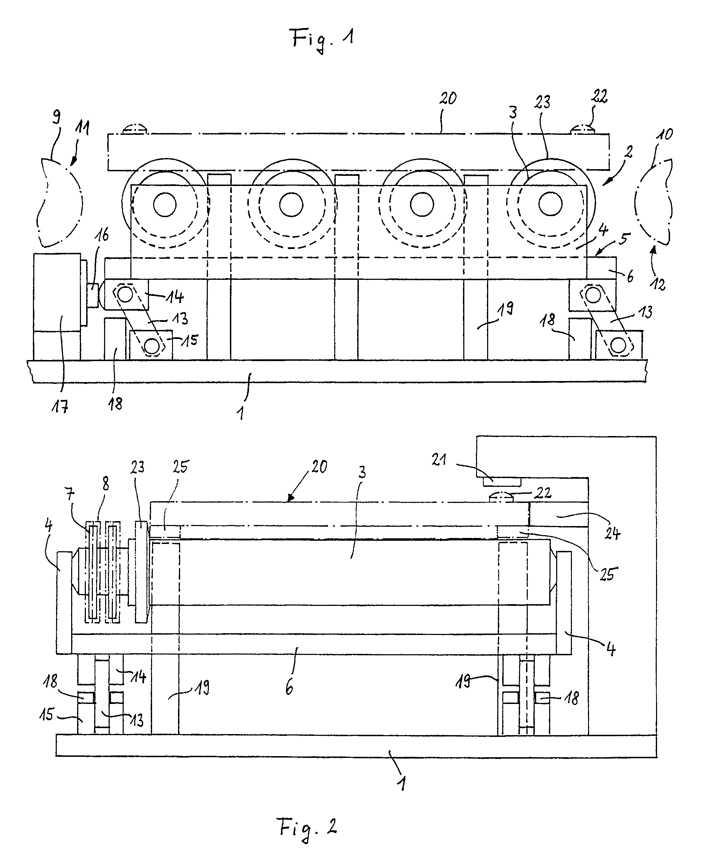

Fig. 1 zeigt schematisiert eine Seitenansicht eines Halte- und Positioniertisches für eine Montagestation.

Fig. 2 zeigt eine Stirnansicht des Halte- und Positioniertisches von Fig. 1.

Der dargestellte Halte- und Positioniertisch umfaßt eine feststehende Platte 1, über der ein Rollenförderer 2 mit Rollen 3, die in Seitenwangen 4 eines Rahmens 5 gelagert sind, angeordnet ist. Die beiden Seitenwangen 4 sind beispielsweise über eine Bodenplatte 6 oder Querstreben unterseitig miteinander verbunden. Die Rollen 3 sind jeweils mit zwei benachbart zueinander angeordneten Kettenrädern 7 versehen und jeweils über eine Kette 8 mit den beiden benachbarten Rollen 3 bzw. an den Enden des Förderers 2 auch mit den benachbarten Rollen 9 bzw. 10 eines Zuliefer- und eines Abführförderers 11 bzw. 12 gekoppelt.

Der Rahmen 5 ist zusammen mit den Rollen 3 gegenüber der Platte 1 in eine gegenüber der in den Abbildungen dargestellte Position geringfügig abgesenkte Position mittels einer Hubvorrichtung absenkbar. Da die an den Enden des Förderers 2 befindlichen Rollen 3 mit den benachbarten Rollen 9, 10 über Ketten 8 gekoppelt sind, ist dies ohne weiteres möglich.

Die Hubvorrichtung umfaßt im dargestellten Ausführungsbeispiel vier Hebel 13, die jeweils in einem Eckbereich des Rahmens 5 an dessen Unterseite angreifen und dort in gabelförmigen Lagerblöcken 14 angelenkt sind. Das andere Ende der Hebel 13 ist jeweils an einem auf der Platte 1 montierten, gabelförmigen Lagerblock 15 angelenkt. Die Hebel 13 verlaufen schräg und bilden eine Parallelogrammanlenkung für den Rahmen 5 an der Platte 1. An einem der La gerblöcke 14 greift der Kolben 16 eines Druckluftzylinders 17 an. Während des Transports ist der Druckluftzylinder 17 beaufschlagt und sein Kolben 16 drückt gegen eine Federvorspannung den Rahmen 5 in die in den Figuren dargestellte Position. Wird die Druckluftbeaufschlagung des Zylinders 17 unterbrochen, wird sein Kolben 16 durch die Federvorspannung zurückgestellt und der Rahmen 5 aufgrund seines Gewichtes entsprechend abgesenkt, bis der Rahmen 5 bzw. die an diesem befestigten Lagerblöcke 14 mit jeweils einem auf der Platte 1 angeordneten Anschlag 18 in Eingriff gelangen. Der Hub in vertikaler Richtung liegt in der Größenordnung weniger mm, beispielsweise 2 bis 3 mm.

Von der Platte 1 ragen stiftförmige Stützelemente 19 vertikal nach oben, die während des Förderns von palettenartigen Werkstückträgern 20 von den Rollen 3 des Förderers 2 überragt werden, so daß sie das Fördern nicht beeinträchtigen.

Wenn hingegen ein von dem Anlieferförderer 11 angelieferter Werkstückträger 20 festgehalten und zur Montage positioniert werden soll, wird dieser durch einen (nicht dargestellten) Stopper, der beispielsweise pneumatisch betätigbar und in die Förderbahn der Werkstückträger 20 einfahrbar ist, angehalten. Ein beispielsweise hierdurch ausgelöstes Signal führt zur Abschaltung der Druckluftbeaufschlagung des Zylinders 17 derart, daß durch die Verschiebung von dessen Kolben 16 der Förderer 2 gegenüber der Platte 1 bis auf die Anschläge 18 abgesenkt wird, so daß die Stützelemente 15 über die durch die Rollen 3 definierte Ebene geringfügig hochragen. Durch Klemmbacken 21 von Klemmvorrichtungen, die mit entsprechenden Vorsprüngen 22, die eine kugelsegmentförmige Oberseite besitzen, an der Oberseite des Werkstückträgers 20 diesen zentrierend in Eingriff gelangen, wird der Werkstückträger 20 gegen die Stützelemente 19 in der Montageposition festklemmt und während der Montage zentriert gehalten.

Wenn die Arbeiten in der Montagestation beendet sind, wird der Rollenförderer 2 über die Hubvorrichtung wieder angehoben, so daß die Stützelemente 15 außer Eingriff bezüglich des Werkstückträgers 20 gelangen. Nach dem Zurückziehen des Stoppers aus dem Transportweg, falls dieser sich noch in der ausgefahrenen Position befindet, wird der Werkstückträger 20 durch den Förderer 2 auf den benachbarten Abführförderer 12 befördert. In diesem Moment befinden die drei Förderer 2, 11, 12 sich auf einem Niveau.

Im dargestellten Ausführungsbeispiel besitzen die Rollen 3 an einer Seite jeweils einen Kranz 23 zum Führen der Werkstückträger 20, die auf der gegenüberliegenden Seite an einer Schiene 24 entlanglaufen. Der Werkstückträger 20 besitzt unterseitig sich in Transportrichtung erstreckende Stahlleisten 25, mit denen die Stützelemente 19 in Eingriff gelangen. Die Stahlleisten 25 sind geringfügig gegenüber der Bodenseite des Werkstückträgers 20 zurückversetzt, so daß sie nicht auf den Rollen 3 laufen. Der Werkstückträger 20 besteht ansonsten zweckmäßigerweise zur Transportgewichtsersparnis aus Kunststoff.

Anstelle eines Rollenförderers 2 kann auch ein Duplexförderer eingesetzt werden, der zwei quer zur Transportrichtung mit Abstand zueinander angeordnete Transportbänder aufweist, zwischen denen die Stützelemente 19 angeordnet sind.

Die Bodenplatte 6 kann ebenso wie der Werkstückträger 20 mit einer Ausnehmung versehen werden, um auf dem Werkstückträger 20 befindliche Werkstücke auch von unten zugänglich zu machen. *)

Wenn - wie im dargestellten Ausführungsbeispiel - ein genügender Zwischenraum zwischen den Rollen 3 des Rollenförderers 2 vorhanden ist, der die Stützelemente 15 aufnimmt, braucht keine Vertikalführung für den Rahmen 5 vorgesehen werden. Da der Vertikalhub im allgemeinen nur wenige mm beträgt, reicht ein entsprechend geringes Spiel zwischen den Rollen 3 und den Stützelementen 19, das ein Verschieben des Rahmens 5 in oder entgegen der Transportrichtung beim Absenken bzw. Anheben zuläßt.

## Ansprüche

1. Montagestation mit einem Förderelemente (3) aufweisenden Förderer (2) zum Befördern Von Werkstückträgern (20), mit einer feststehenden Platte (1) verbundene Klemmbacken (21) zum Positionieren und Halten der Werkstückträger (20) in einer Bearbeitungsposition für von den Werkstückträgern (20) getragene Werkstücke und mit einem in die Förderbahn der Werkstückträger (20) einführbaren Stopper zum Anhalten der Werkstückträger (20) gegenüber dem Förderer (2), dadurch **gekennzeichnet,** daß die feststehende Platte (1) mit davon aufragenden Stützelementen (19) versehen ist, die zwischen den Förderelementen (3) angeordnet sind, der Förderer (2) gegenüber der Platte (1) über eine Hubeinrichtung derart absenkbar ist, daß die Stützelemente (19) etwas über die von dem Förderer (2) gebildete Förderebene hinausragen, und die Klemmbacken (21) in Richtung gegen die Stützelemente (19) verstellbar sind.

2. Montagestation nach Anspruch 1, dadurch gekennzeichnet, daß der Förderer (2) ein Rollenförderer ist, wobei die Stützelemente (15) jeweils zwischen den Rollen (3) des Rollenförderers angeordnet sind.

3. Montagestation nach Anspruch 1 oder 2, dadurch gekennzeichnet, daß die Stützelemente (19) Stützstifte sind.

4. Montagestation nach einem der Ansprüche 1 bis 3, dadurch gekennzeichnet, daß die Hubeinrichtung eine von einem Betätigungszylinder (13) betätigbare Parallelogrammanlenkung (13 bis 15) des Rahmens (5) des Förderers (2) an der Platte (1) um-

---

*) In einem solchen Fall können die Rollen 3 auch geteilt ausgebildet sein, so daß unter der Mitte des Werkzeugträgers 20 die vollständig freie Zugänglichkeit erreicht wird.

faßt.

5. Montagestation nach Anspruch 4, dadurch gekennzeichnet, daß der Betätigungszylinder (13) ein Pneumatikzylinder ist, dessen Kolben (16) federvorgespannt ist.

6. Montagestation nach einem der Ansprüche 2 bis 5, dadurch gekennzeichnet, daß zwischen den Rollen (3) und den Stützelementen (19) ausreichendes Spiel besteht, so daß der Förderer (2) in seine abgesenkte Position schwenkbar ist.

7. Montagestation nach einem der Ansprüche 1 bis 6, dadurch gekennzeichnet, daß gegebenenfalls einstellbare Anschläge (18) für die abgesenkte Position des Förderers (2) vorgesehen sind.

8. Montagestation nach einem der Ansprüche 1 bis 7, dadurch gekennzeichnet, daß der Werkstückträger (20) sich in Transportrichtung erstreckende, unterseitige Stahlleisten (25) trägt und die Stützelemente (19) im Bereich der Stahlleisten (25) angeordnet sind.

Fig. 1

Fig. 2

## EUROPÄISCHER RECHERCHENBERICHT

<table>
<tr><td colspan="4">**EINSCHLÄGIGE DOKUMENTE**</td></tr>
<tr><td>Kategorie</td><td>Kennzeichnung des Dokuments mit Angabe, soweit erforderlich, der maßgeblichen Teile</td><td>Betrifft Anspruch</td><td>KLASSIFIKATION DER ANMELDUNG (Int. Cl.5 )</td></tr>
<tr><td>X</td><td>US-A-4394897 (BREMS)<br>* Spalte 3, Zeile 61 - Spalte 4, Zeile 11;<br>Figuren 1, 4, 8-10 *</td><td>1, 8</td><td>B23Q7/14<br>B23P21/00</td></tr>
<tr><td>A</td><td>---</td><td>4</td><td></td></tr>
<tr><td>Y</td><td>FR-A-2114168 (CHRYSLER FRANCE)<br>* Seite 5, Zeilen 4 - 33; Figuren 3-8 *</td><td>1</td><td></td></tr>
<tr><td>A</td><td>---</td><td>2, 3</td><td></td></tr>
<tr><td>Y</td><td>DE-A-2535202 (THE CROSS CO.)<br>* Seite 10, Zeile 29 - Seite 11, Zeile 23;<br>Figuren 6, 13 *<br>-----</td><td>1</td><td></td></tr>
<tr><td></td><td></td><td></td><td>RECHERCHIERTE SACHGEBIETE (Int. Cl.5 )<br><br>B23P<br>B23Q<br>B65G</td></tr>
</table>

Der vorliegende Recherchenbericht wurde für alle Patentansprüche erstellt

| Recherchenort | Abschlußdatum der Recherche | Prüfer |
|---|---|---|
| BERLIN | 07 DEZEMBER 1990 | SIMON, J |